# EUROPÄISCHE PATENTANMELDUNG

(11) **EP 1 739 596 A1**
(43) Veröffentlichungstag der Anmeldung: **03.01.2007**
(21) Anmeldenummer: 05013309.9
(22) Anmeldetag: 21.06.2005
(51) Int. Cl.: G06K 19/077

(54) **Karte und Herstellungsverfahren**

(71) Anmelder: VisionCard PersonalisierungsgmbH, 6175 Kematen/Tirol (AT)
(72) Erfinder: Wolny, Robert, 6063 Rum (AT)
(74) Vertreter: Ostermann, Thomas

(57) **Zusammenfassung**

Die Erfindung betrifft eine Karte für kontaktlose Daten- und/oder Energieübertragung mit externen Geräten enthaltend einen mehrschichtigen Kartenkörper, der eine Trägerschicht (6) aufweist zur Aufnahme einer Antennenspule (7) mit an einer Oberseite der Trägerschicht freiliegenden Spulenanschlüssen (12), die elektrisch leitend mit Anschlüssen eines auf einem Leadframe (9) angeordneten Chips (8) verbunden sind, wobei der Chip in einer Ausnehmung (13) der Trägerschicht (6) eingefasst ist und wobei das Leadframe (9) unter Überdeckung von Windungen (16) der Antennenspule (7) verläuft, wobei die Windungen (16) der Antennenspule auf der Oberseite (20) der Trägerschicht (6) verlaufen und dass die Karte eine gestanzte Leadframe-Ausgleichsschicht (3) aufweist. Weitere Kartenschichten werden danach als Ober- und Unterdeckschichten laminiert.

## Beschreibung

Die Erfindung betrifft eine Karte für kontaktlose Daten- und/oder Energieübertragung mit externen Geräten enthaltend einen mehrschichtigen Kartenkörper, der eine Trägerschicht aufweist zur Aufnahme einer Antennenspule mit an einer Oberseite der Trägerschicht freiliegenden Spulenanschlüssen, die elektrisch leitend mit Anschlüssen eines auf einem Leadframe angeordneten Chips verbunden sind, wobei der Chip in einer Ausnehmung der Trägerschicht eingefasst ist und wobei das Leadframe unter Überdeckung von Windungen der Antennenspule verläuft.

Ferner betrifft die Erfindung ein Verfahren zur Herstellung einer Karte für kontaktlose Daten- und/oder Energieübertragung mit externen Geräten, wobei ein einen Chip tragendes Leadframe mit einer eine Antennenspule aufweisenden Trägerschicht verbunden wird und wobei Anschlüsse des Leadframes mit Spulenanschlüssen der Antennenspule elektrisch leitend verbunden werden.

Aus der DE 100 32 676 A1 ist es bekannt, zur Herstellung einer Karte für kontaktlose Daten- und/oder Energieübertragung mit externen Geräten ein mit einem Chip bestücktes Leadframe mit einer eine Antennenspule aufweisenden Trägerschicht vorläufig zu fixieren. Die Antennenspule ist innerhalb der Trägerschicht eingefasst, wobei Spulenanschlüsse zur Verbindung mit Anschlüssen des Chips freigelegt sind. Zur Verbindung des Leadframes mit der Trägerschicht weist das Leadframe abragende Ösen auf, die unter Kontaktierung der Anschlüsse des Leadframes bzw. der Spule in die Trägerschicht einschneiden. In der Kontaktierstellung liegt das Leadframe flächig auf einer Oberseite der Trägerschicht an, wobei die Windungen der in der Trägerschicht eingefassten Spule beabstandet zu der Oberfläche des Leadframes angeordnet sind.

Aufgabe der vorliegenden Erfindung ist es, eine Karte, ein Halbzeug bzw. ein Verfahren zur Herstellung einer Karte derart anzugeben, dass eine prozesssichere und einfache Herstellung einer mit einem Leadframe und einer Antennenspule versehenen kontaktlos zu betreibenden Karte ermöglicht wird.

Zur Lösung dieser Aufgabe ist die erfindungsgemäße Karte in Verbindung mit dem Oberbegriff des Patentanspruchs 1 dadurch gekennzeichnet, dass die Windungen der Antennenspule auf der Oberseite der Trägerschicht verlaufen und dass auf der Seite des Leadframes eine Leadframe-Ausgleichsschicht verläuft.

Der besondere Vorteil der erfindungsgemäßen Karte besteht darin, dass auf einfache weise die Verwendung eines mit einem Chip bestückten Leadframes mit einer auf einer Trägerschicht aufgebrachten Antennenspule ermöglicht wird. Die erfindungsgemäße Leadframe-Ausgleichsschicht verhindert ein unerwünschtes Reißen der an der Oberfläche der Trägerschicht angeordneten windungen der Antennenspule.

Das Leadframe ist durch eine auf der Antennenseite befindlichen in Größe des Leadframes gestanzten Leadframeausgleichsschicht eingefasst. Durch diese beiden Ausnehmungen für Chip und Leadframe ist das Modul beim Laminiervorgang geschützt.

Nach einer Weiterbildung der Erfindung ist die Leadframe-Ausgleichsschicht in einem solchen Bereich angeordnet, dass ein mechanischer Schutz der Windungen der Antennenspule vor dem Leadframekörper gewährleistet ist. Die Leadframe-Ausgleichsschicht überdeckt im Leadframebereich zumindest die windungen der Antennenspule. Vorzugsweise hängt die Dicke der Leadframe-Ausgleichsschicht von der Dicke des Leadframes ab. Je dicker das Leadframe ausgebildet ist, desto dicker ist auch die Leadframe-Ausgleichsschicht.

Zur Lösung der Aufgabe ist das erfindungsgemäße Verfahren in Verbindung mit dem Oberbegriff des Patentanspruchs 7 dadurch gekennzeichnet, dass das Leadframe und/oder die Trägerschicht unter Anlage an einer Leadframe-Ausgleichsschicht mit außen liegenden Deckschichten durch Laminieren verbunden werden.

Der besondere vorteil des erfindungsgemäßen Verfahrens besteht darin, dass auf einfache Weise eine prozesssichere Herstellung einer Karte ermöglicht wird, ohne dass eine umfängliche Bearbeitung von einzelnen Schichten erforderlich ist. Eine zusätzliche Leadframe-Ausgleichsschicht ermöglicht einen langzeitstabilen Betrieb einer ein Leadframe enthaltenen Karte. Eine feste und innige verbindung der Kartenschichten wird durch Laminieren ermöglicht, wobei die Windungen der Antennenspule vor mechanischer Beanspruchung durch das Leadframe selbst geschützt sind.

Nach einer weiterbildung der Erfindung kann die Antennenspule durch Siebdrucken auf einer Seite der Trägerschicht aufgebracht werden, ohne dass die windungen der Antennenspule im Betrieb der Karte durch verwendung eines Leadframes Schaden nehmen. Die Trägerschicht erfordert eine zusätzliche Bearbeitung, bevor sie mit den weiteren Kartenschichten laminiert wird. Die Trägerschicht wird mit einer Ausstanzung versehen zur Aufnahme des Chips. Die Leadframeausgleichsfolie wird mit einer Ausstanzung in Größe des Leadframes versehen.

Auf einfache weise werden die Spulenanschlüsse der Trägerschicht mittels eines elektrisch leitenden Klebers mit den Anschlüssen des Leadframes verbunden. Hierdurch ist eine besonders einfach elektrische Kontaktierung gegeben.

Weitere Vorteile der Erfindung ergeben sich aus den weiteren Unteransprüchen.

Ein Ausführungsbeispiel der Erfindung wird nachfolgend anhand der Zeichnungen näher erläutert.

### Es zeigen:

- Figur 1: eine Draufsicht auf eine Kernschicht der Karte und
- Figur 2: einen Querschnitt durch die Kernschicht im Bereich eines Leadframes.

Eine erfindungsgemäße Karte für kontaktlose Daten- und/oder Energieübertragung mit externen Geräten weist einen mehrschichtigen Kartenkörper auf, der im wesentlichen aus einem Prelaminat 1 als Halbzeug und mindestens einer sich am Prelaminat 1 anschließenden bedruckbaren Druckschicht und einer transparenten Overlayschicht besteht.

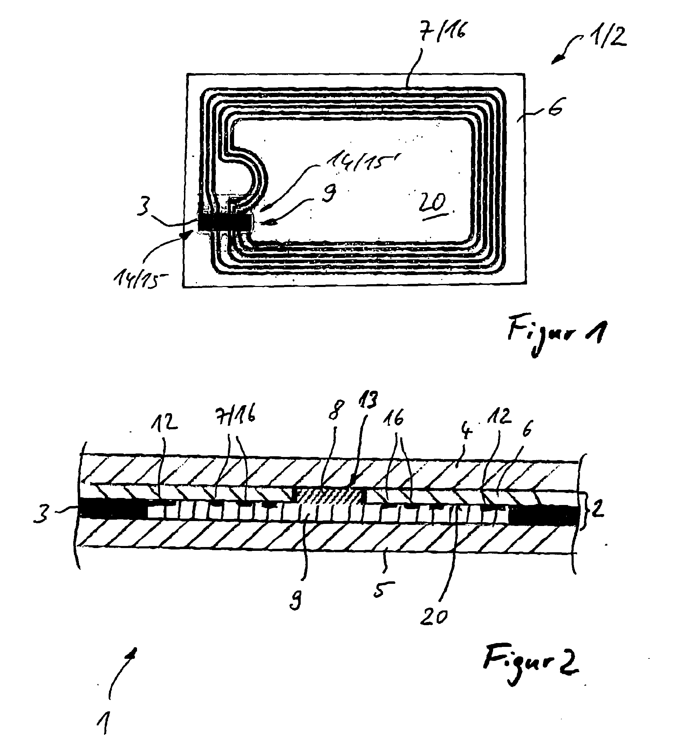

In den Figuren 1 und 2 ist ein Prelaminat 1 dargestellt, das im Wesentlichen aus einer Kernschicht 2 mit Stanzung für einen Chip 8, einer gestanzten Leadframe-Ausgleichsschicht 3, einer oberen Deckschicht 4 und einer unteren Deckschicht 5 besteht.

Die Kernschicht 2 besteht zum einen aus einer Trägerschicht 6, auf der eine Antennenspule 7 aufgebracht ist. Zum anderen besteht die Kernschicht 2 aus einem mit dem Chip 8 versehenen Leadframe 9, das flächig auf einer Oberseite 20 der Trägerschicht 6 angeordnet ist. Vorzugsweise ist das Leadframe 9 auf einer der Trägerschicht 6 zugewandten Seite mit einer nicht dargestellten Isolierschicht versehen, die sich unter Aussparung des Chips 8 und Anschlüssen 12 des Leadframes 9 flächig zwischen dem Leadframe 9 und der Trägerschicht 6 erstreckt.

Die Trägerschicht 6 ist mit einer Ausnehmung 13 versehen, so dass der Chip 8 in der Trägerschicht 6 unter flächiger Anlage des Leadframes 9 an der Oberseite 20 der Trägerschicht 6 eingefasst ist. Vorzugsweise wird die Ausnehmung 13 durch Ausstanzen der Trägerschicht 6 hergestellt.

Die Anschlüsse 12 des Leadframes 9 sind im Bereich von stirnseitigen Enden 14 des lang gestreckten und mit den korrespondierenden Anschlüssen des Chips 8 verbundenen Metalllappen 15, 15' aufweisenden Leadframes 9 angeordnet. Die Metalllappen 15, 15' erstrecken sich quer zu Windungen 16 der Antennenspule 7, wobei die endseitigen Anschlüsse 12 der Metalllappen 15, 15' zu Spulenanschlüssen korrespondieren. Die Spulenanschlüsse sind mit den Leadframeanschlüssen 12 mittels eines elektrisch leitenden Klebers verbunden.

Auf der Antennenseite der Trägerschicht 6 erstreckt sich die gestanzte Leadframe-Ausgleichsschicht 3 vollflächig und bettet das Leadframe 9 ein. Sie dient zum Schutz des Leadframes 9 und des Chips 8 und zur Vermeidung des Einreißens der Windungen 16 durch die Metalllappen 15, 15' des Leadframes 9 während einer Biegebeanspruchung der Karte. Die Leadframe-Ausgleichsschicht 3 ist von der Dicke des Leadframes 9 abhängig. Vorzugsweise ist die Dicke der Leadframe-Ausgleichsschicht 3 größer oder gleich als die Dicke des Leadframes 9. Im vorliegenden Ausführungsbeispiel weist das Prelaminat 1 eine Dicke von 550 µ auf. Die obere Deckfolie 4, die untere Deckfolie 5 sowie die Kernschicht 2 weisen jeweils eine Dicke von 150 µ, die Leadframe-Ausgleichsschicht 3 eine Dicke von 100 µ auf. Die Leadframe-Ausgleichsschicht 3 korrespondiert in ihrer Abmessung zu dem Leadframe 9.

Die Herstellung des Prelaminats 1 erfolgt folgendermaßen. In einem ersten Schritt wird die Antennenspule 7 auf die Trägerschicht 6 durch Siebdrucken aufgebracht. In einem zweiten Schritt wird durch Ausstanzen die Ausnehmung 13 zur Aufnahme des Chips 8 hergestellt. In einem weiteren Schritt wird der elektrisch leitende Kleber 18 auf die Spulenanschlüsse 17 aufgebracht. Das mit dem Chip 8 bestückte Leadframe 9, dessen Metalllappen 15, 15' bis auf die stirnseitigen Enden 14, die als Anschlüsse 12 dienen, mit einer Isolierung versehen sind, wird unter Einsetzen des Chips 8 in die Ausnehmung 13 auf die Oberseite 10 der Trägerschicht 6 angelegt. In einem weiteren Schritt wird die Leadframe-Ausgleichsschicht 3 gestanzt und auf das Leadframe 9 aufgesetzt und angeheftet. Nachfolgend werden die obere Deckschicht 4 und die untere Deckschicht 5 flächig zu beiden Seiten der Trägerschicht 6 angeheftet, so dass im folgenden Schritt durch das Aufbringen von Druck und wärme das Prelaminat 1 laminiert wird.

Das als Halbzeug dienende Prelaminat 1 kann nun durch Aufbringen weiterer Schichten zu einer kontaktlos betreibbaren Karte hergestellt werden.

Nach einer nicht dargestellten alternativen Ausführungsform der Erfindung kann das Leadframe 9 auch ohne Isolierschicht 11 bereitgestellt werden. In diesem Fall ist eine zusätzliche Isolierfolie zwischen das Leadframe 9 und der Trägerschicht 6 im Bereich der Windungen 16 anzubringen.

Alternativ kann die Isolierschicht auch zusätzlich angebracht werden. Vorzugsweise ist die Isolierschicht 11 als eine Klebefolie mit einer Dicke von 60 µ ausgebildet.

## Patentansprüche

1. Karte für kontaktlose Daten- und/oder Energieübertragung mit externen Geräten enthaltend einen mehrschichtigen Kartenkörper, der eine Trägerschicht aufweist zur Aufnahme einer Antennenspule mit an einer Oberseite der Trägerschicht freiliegenden Spulenanschlüssen, die elektrisch leitend mit Anschlüssen eines auf einem Leadframe angeordneten Chips verbunden sind, wobei der Chip in einer Ausnehmung der Trägerschicht eingefasst ist und wobei das Leadframe unter Überdeckung von windungen der Antennenspule verläuft, **dadurch gekennzeichnet, dass** die Windungen (16) der Antennenspule (7) auf der Oberseite (10) der Trägerschicht (6) verlaufen und dass auf einer der Trägerschicht (6) zugewandten und/oder abgewandten Seite des Leadframes (9) eine gestanzte Leadframe-Ausgleichsschicht (3) verläuft.

2. Karte nach Anspruch 1 oder 2, **dadurch gekennzeichnet, dass** die Dicke der gestanzten Leadframe-Ausgleichsschicht (3) von der Dicke des Leadframes (9) abhängt und dass die Leadframe-Ausgleichsschicht (3) durch Laminieren mit dem Leadframe (9) und/oder der Trägerschicht (6) verbunden ist.

3. Karte nach einem der Ansprüche 1 bis 3, **dadurch gekennzeichnet, dass** das Leadframe (9) auf einer der Trägerschicht (6) zugewandten Seite über eine Isolierschicht (11) auf den windungen (16) der Antennenspule (7) aufliegt.

4. Karte nach Anspruch 4, **dadurch gekennzeichnet, dass** die Isolierschicht (11) als eine nicht elektrisch leitende Klebefolie ausgebildet ist.

5. Halbzeug für eine Karte nach einem der Ansprüche 1 bis 5, **dadurch gekennzeichnet, dass** eine aus einer Trägerschicht (6) für die Antennenspule (7) und ein den Chip (8) tragendes Leadframe (9) gebildete Kernschicht (2) durch Wärme und Druck mit einer auf einer Trägerschicht (6) zugewandten Seite des Leadframes (9) positionierten und gestanzten Leadframe-Ausgleichsschicht (3) sowie mit einer flächig an der Trägerschicht (6) angeordneten oberen Deckschicht (4) und einer unteren Deckschicht (5) verbunden ist.

6. Verfahren zur Herstellung einer Karte für kontaktlose Daten- und/oder Energieübertragung mit externen Geräten, wobei ein einen Chip (8) tragendes Leadframe (9) mit einer eine Antennenspule (7) aufweisenden Trägerschicht (6) verbunden wird und wobei Anschlüsse (12) des Leadframes (9) mit Spulenanschlüssen (17) der Antennenspule (7) elektrisch leitend verbunden werden,
**dadurch gekennzeichnet, dass** das Leadframe (9) und/oder die Trägerschicht (6) unter Anlage an einer Leadframe-Ausgleichsschicht (3) mit außen liegenden Deckschichten (4, 5) durch Laminieren verbunden werden.

7. Verfahren nach Anspruch 7, **dadurch gekennzeichnet, dass** die Antennenspule (7) durch Siebdrucken auf einer Seite der Trägerschicht (6) aufgebracht wird und dass eine Aussparung (13) in einem für den Chip (8) vorgesehenen Bereich ausgestanzt wird zur Aufnahme desselben.

8. Verfahren nach Anspruch 7 oder 8, **dadurch gekennzeichnet, dass** die Spulenanschlüsse (17) mit den Anschlüssen (12) des Leadframes (9) mittels eines elektrisch leitenden Klebers (18) verbunden werden.

9. verfahren nach einem der Ansprüche 7 bis 9, **dadurch gekennzeichnet, dass** die Leadframe-Ausgleichsschicht (3) zumindest in der Dimension des Leadframes (9) ausgestanzt wird und an der Trägerfolie (6) angeheftet wird, bevor die Kartenschichten (3, 4, 5, 6) durch Laminieren verbunden werden.
